# DEMANDE DE BREVET EUROPEEN

(11) **EP 0 916 824 A1**
(43) Date de publication de la demande: **19.05.1999**
(21) Numéro de dépôt: 98402810.0
(22) Date de dépôt: 13.11.1998
(51) Int. Cl.: F02B 31/08, F02B 31/06

(54) **Moteur à combustion interne à allumage commandé, à injection directe et à bougie décalée**

(30) Priorité: 13.11.1997 FR 9714249
(71) Demandeur: RENAULT, 92109 Boulogne-Billancourt (FR)
(72) Inventeur: Rivière, Jean-Pierre, 75016 Paris (FR)

(57) **Abrégé**

L'invention propose un moteur dans la culasse (18) duquel débouchent deux conduits d'admission (30), agencés de chaque côté d'un plan (P1) contenant l'axe (A1) du cylindre (10), et un conduit d'échappement (36) dont l'axe est contenu dans ce plan (P1), caractérisé en ce qu'un injecteur (40) débouche dans la chambre radialement vers l'extérieur par rapport à un second plan (P2) parallèle à l'axe (A1) et passant par le centre des conduits d'admission (30), en ce que le cylindre (10) comporte au moins une bougie (34) qui est agencée du côté opposé au nez (42) de l'injecteur (40) par rapport au second plan (P2) et qui est décalée par rapport au premier plan (P1), et en ce qu'il est organisé un mouvement des gaz contenus dans la chambre.

## Description

L'invention concerne un moteur à combustion interne à allumage commandé, à injection directe et à bougie d'allumage décalée.

L'invention concerne plus particulièrement un moteur à combustion interne à allumage commandé et à injection directe, du type dans lequel un cylindre comporte une chambre de combustion qui est délimitée axialement vers le haut par une face inférieure d'une culasse dans laquelle débouchent d'une part deux conduits d'admission, qui sont agencés de part et d'autre d'un premier plan de référence contenant l'axe du cylindre, et d'autre part un conduit d'échappement dont l'axe de débouché est sensiblement contenu dans le premier plan de référence, et du type comportant un injecteur d'essence dont le nez débouche dans la chambre de combustion.

Les moteurs à combustion interne et à allumage commandé ont grand avantage à être mis en oeuvre avec un dispositif d'injection directe du carburant dans le cylindre.

En effet, l'utilisation de l'injection directe permet d'optimiser le fonctionnement du moteur avec des mélanges dits "pauvres", c'est-à-dire des mélanges carburés dans lesquels il existe un fort excès d'air par rapport à la quantité de carburant introduite dans le cylindre.

L'utilisation des mélanges pauvres permet notamment de réduire de manière importante la consommation de carburant mais aussi de réduire la température maximale atteinte au cours de la combustion, ce qui permet de diminuer la production de substances polluantes telles que les oxydes d'azote (NOx).

De même, l'excès d'air permet d'éviter qu'une partie du carburant reste imbrûlée après la combustion et soit évacuée avec les gaz d'échappement.

L'utilisation d'un mélange "pauvre" est toutefois à la source d'un certain nombre de problèmes. Notamment, l'allumage de la combustion du mélange air/carburant est rendu plus difficile du fait de la faible proportion de carburant par rapport à l'air.

Dans le but de contourner ce problème, on cherche donc à faire fonctionner les moteurs à allumage commandé, lorsqu'ils sont alimentés en mélanges "pauvres", selon le principe des charges stratifiées dans lesquelles le mélange carburé n'a pas une composition homogène dans tout le cylindre. On cherche ainsi à provoquer une plus grande concentration du carburant à proximité de la bougie d'allumage de telle sorte que l'étincelle que celle-ci produit puisse provoquer facilement le démarrage de la combustion dans le cylindre.

L'injection directe permet notamment de réaliser de telles charges stratifiées.

Cependant, pour aboutir à un fonctionnement optimal du moteur, il est nécessaire de considérer l'ensemble des paramètres qui régissent l'aérodynamique interne du cylindre, c'est-à-dire l'écoulement des différents fluides dans le cylindre au cours d'un cycle moteur, en tenant notamment compte de la forme de la culasse, des ouvertures et fermetures des soupapes d'admission et d'échappement, de la position et de l'orientation de l'injecteur et des mouvements alternatifs du piston.

L'invention a donc pour objet de proposer une solution globale quant à la géométrie et à l'implantation des éléments essentiels d'un moteur à combustion interne et à allumage commandé qui permette d'obtenir un fonctionnement optimal du moteur avec des charges "pauvres" stratifiées.

Dans ce but, l'invention propose un moteur du type décrit précédemment, caractérisé en ce que l'injecteur est agencé radialement vers l'extérieur par rapport à un second plan de référence qui est parallèle à l'axe du cylindre et qui passe par le centre du débouché des conduits d'admission, en ce que le cylindre comporte au moins une bougie d'allumage qui est agencée du côté opposé au nez de l'injecteur par rapport au second plan de référence et qui est décalée sur un côté par rapport au premier plan de référence, et en ce qu'au moins un des conduits d'admission comporte des moyens pour créer dans la chambre de combustion, au moins pour certaines phases de fonctionnement du moteur, un mouvement organisé des gaz contenus dans la chambre.

Selon d'autres caractéristiques de l'invention :
- le cylindre est délimité vers le bas par la face supérieure d'un piston, et un évidement concave est aménagé dans la face supérieure du piston ;
- l'évidement concave est agencé en dessous de la bougie d'allumage ;
- la face supérieure du piston présente, du côté opposé à l'évidement par rapport au premier plan de référence, une forme complémentaire de la face inférieure de la culasse de manière à chasser, selon une direction perpendiculaire au premier plan de référence, le carburant et/ou les gaz en direction de la bougie d'allumage ;
- le nez d'injecteur est dirigé sensiblement en direction de l'évidement de la face supérieure du piston ;
- le moteur comporte deux bougies d'allumage qui sont agencées symétriquement de part et d'autre du premier plan de référence ;
- la face supérieure du piston comporte une nervure qui est agencée selon le premier plan de référence et qui sépare l'évidement concave, au moins partiellement, en deux alvéoles ;
- les alvéoles s'étendent chacune en dessous de l'une des bougies ;
- le carburant est injecté par l'injecteur en direction de la face supérieure du piston, et il est réparti dans les deux alvéoles ;
- l'injecteur comporte au moins deux axes principaux d'injection de carburant qui sont dirigés chacun en direction d'une des alvéoles ;
- les conduits d'admission débouchent dans la chambre selon une direction sensiblement parallèle à l'axe du cylindre ;
- la face inférieure de la culasse qui délimite le cylindre est conformée en un toit à deux pans, les conduits d'admission et l'injecteur débouchent dans un premier des pans tandis que le conduit d'échappement et la bougie débouchent dans le second des pans ;
- le mouvement organisé des gaz dans le cylindre comporte un mouvement de rotation autour d'un axe perpendiculaire au premier plan de référence selon un sens horaire lorsque l'on regarde le cylindre de telle sorte que les conduits d'admission sont à droite et le conduit d'échappement à gauche ;
- le mouvement organisé des gaz dans le cylindre comporte un mouvement de rotation autour d'un axe perpendiculaire au premier plan de référence selon un sens anti-horaire lorsque l'on regarde le cylindre de telle sorte que les conduits d'admission sont à droite et le conduit d'échappement à gauche ;
- l'évidement concave est décentré de manière à être agencé sensiblement en dessous du débouché du conduit d'échappement ; et
- le mouvement organisé des gaz dans le cylindre comporte un mouvement de rotation autour d'un axe sensiblement parallèle à l'axe du cylindre.

D'autres caractéristiques et avantages de l'invention apparaîtront à la lecture de la description détaillée qui suit pour la compréhension de laquelle on se reportera aux dessins annexés dans lesquels :
- la figure 1 est une vue schématique en coupe axiale, selon la ligne 1-1 de la figure 4, d'un cylindre d'un moteur à combustion interne selon l'invention ;
- la figure 2 est une vue schématique en plan de la face supérieure du piston de la figure 1 ;
- la figure 3 est une vue en perspective du piston de la figure 2 ;
- la figure 4 est une vue, depuis l'intérieur du cylindre et selon l'axe de celui-ci, de la face inférieure de la culasse qui délimite le cylindre vers le haut ; et
- les figures 5 et 6 sont des vues similaires à celles des figures 3 et 4 illustrant un second mode de réalisation de l'invention.

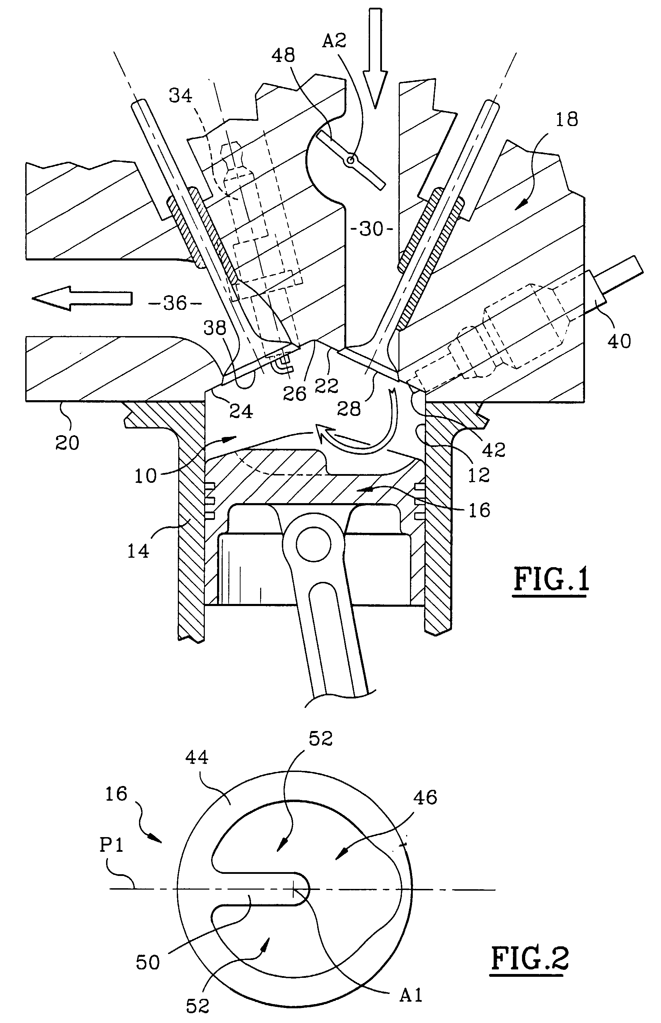

On a représenté sur la figure 1 un cylindre 10 d'un moteur à combustion interne à allumage commandé et à injection directe, notamment pour l'entraînement d'un véhicule automobile.

Le cylindre 10 est réalisé sous la forme d'un alésage 12 cylindrique d'axe A1 aménagé dans un bloc-moteur 14. Par convention, l'axe A1 est illustré verticalement à la figure 1 et est appelé aussi axe vertical du cylindre. Un piston 16 est animé d'un mouvement alternatif axial dans l'alésage 12 et il délimite, vers le bas, le volume du cylindre. De manière connue, le bloc-moteur 14 est recouvert d'une culasse 18 dont une face inférieure 20 délimite vers le haut le cylindre 10. En l'occurrence, au-dessus du cylindre 10, la face inférieure 20 est conformée en un toit présentant deux pans 22, 24 sensiblement plans et inclinés l'un par rapport à l'autre autour d'une arête sommitale 26.

Lorsque le piston 16 est au point mort haut, le volume du cylindre 10 délimité entre le piston 16 et la culasse 18 est appelé chambre de combustion.

Le cylindre 10 du moteur selon l'invention comporte deux soupapes d'admission 28 qui obturent chacune l'extrémité débouchante d'un conduit d'admission d'air 30.

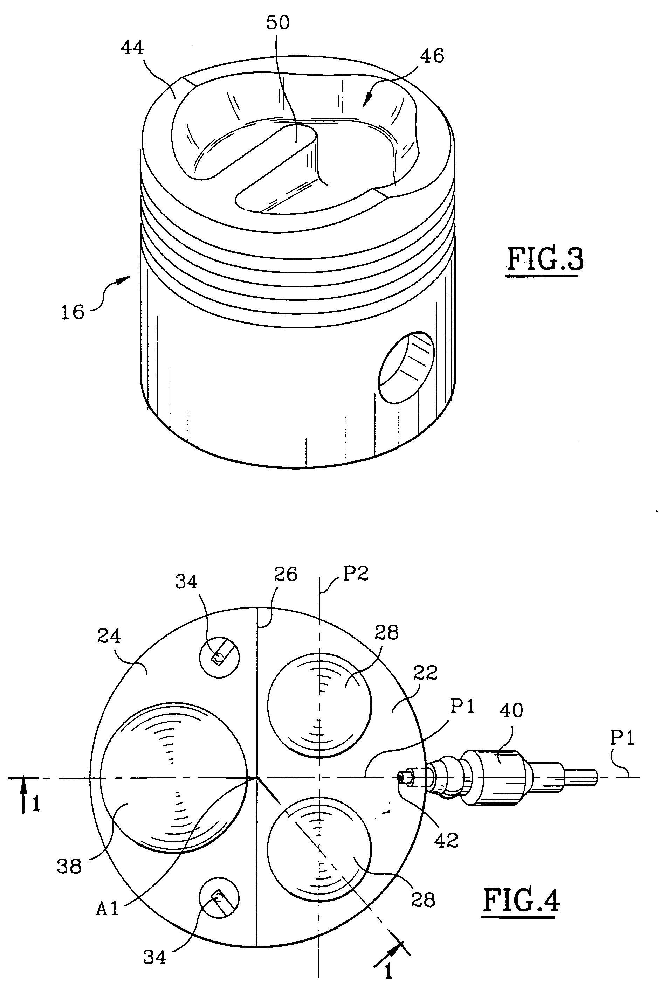

Les conduits 30 débouchent tous les deux dans un premier 22 des pans 22, 24 du toit de la face inférieure 20 de la culasse 18. Ainsi, comme on peut le voir plus particulièrement sur les figures 2 et 4, les soupapes d'admission 28 sont agencées sensiblement de part et d'autre d'un premier plan de référence P1 qui est perpendiculaire à l'arête 26 du toit et qui contient l'axe A1 du cylindre 10.

Par ailleurs, la culasse 18 comporte aussi un conduit d'échappement 36 des gaz brûlés qui débouche dans le cylindre 10 dans le second 24 des pans du toit de la face inférieure 20. L'extrémité débouchante du conduit d'échappement 36 est destinée à être obturée par une soupape d'échappement 38 dont le diamètre est par exemple supérieur au diamètre des deux soupapes d'admission 28.

Comme on peut le voir sur la figure 4, la soupape d'échappement 38 est agencée à cheval sur le premier plan de référence P1.

S'agissant d'un moteur à injection directe, le cylindre 10 comporte donc un injecteur de carburant 40 dont le nez 42 débouche directement dans le cylindre, en l'occurrence dans le pan 22 du toit de la face inférieure 20 de la culasse 18 dans lequel débouchent les conduits d'admission 30.

Selon un aspect de l'invention, l'injecteur est agencé sensiblement dans le premier plan de référence et il est orienté en direction de l'axe A1 du cylindre 10.

Par rapport à un second plan de référence P2 parallèle à l'axe A1 du cylindre 10 et passant par le centre des deux soupapes d'admission 28, l'injecteur 40 est agencé radialement plus à l'extérieur, sensiblement en périphérie du cylindre 10.

Comme on peut le voir sur les figures 2 et 3, le premier mode de réalisation d'un cylindre 10 selon l'invention comporte deux bougies d'allumage 34. Les électrodes des bougies débouchent dans le pan 24 du toit dans lequel débouche le conduit d'échappement 36. Les bougies 34 sont agencées symétriquement de part et d'autre du premier plan de référence P1, à proximité de l'arête 26 du toit, plutôt dans une zone périphérique du cylindre 10.

Cette disposition des bougies 34 permet notamment de pouvoir utiliser des soupapes d'admission 28 et d'échappement 38 de grand diamètre par rapport au diamètre du cylindre 10.

Comme on peut le voir sur les figures 1 à 3, la face supérieure 44 du piston 16, qui délimite le cylindre 10 axialement vers le bas, est munie d'un évidement concave 46.

L'évidement 46 s'étend en regard du nez 42 de l'injecteur 40, en regard des soupapes d'admission 28, et en regard des bougies 34.

Comme on peut le voir par ailleurs sur la figure 1, l'un au moins des conduits d'admission 30 s'étend sensiblement verticalement, c'est-à-dire parallèlement à l'axe A1 du cylindre, et est pourvu d'un dispositif destiné à provoquer, au moins pour certaines phases de fonctionnement du moteur, un mouvement organisé, en l'occurrence de type "tumble", des gaz admis dans le cylindre 10.

Les gaz admis dans le cylindre 10 sont en effet alors animés d'un mouvement organisé dont l'axe de rotation est perpendiculaire au premier plan P1 de référence et dont le sens est globalement centripète en ce que le mouvement tourbillonnaire des particules gazeuses est globalement descendant à proximité de la face latérale de l'alésage 12, centripète le long de la face supérieure 34 du piston 16, et remontant sensiblement le long de l'axe A1 du cylindre 10. Lorsque l'on regarde le cylindre 10 tel qu'illustré à la figure 1, c'est à dire selon une direction perpendiculaire à l'axe A1 et de telle que sorte que les conduits d'admission 30 soient à droite et le conduit d'échappement à gauche, le mouvement de rotation s'effectue dans le sens horaire.

Pour créer ce mouvement tourbillonnaire, on peut par exemple utiliser, comme cela est représenté sur la figure 1, un papillon 48 qui est monté pivotant autour d'un axe A2 dans le conduit d'admission 30, en amont de la soupape d'admission 28, et qui est commandé en rotation autour de cet axe pour créer un mouvement tourbillonnaire de plus ou moins grande importance en fonction de sa position angulaire.

Ainsi, grâce à l'invention, le mouvement tourbillonnaire créé dans les conduits d'admission 30 est tel que l'air admis dans le cylindre 10 tend à emporter les particules de carburant injecté par l'injecteur 40 tout d'abord en direction du piston 16 dans lequel le flux gazeux est guidé par l'évidement concave 46 pour être dirigé en direction des bougies 34. Grâce à cet écoulement, on arrive à créer au voisinage de chacune des bougies 34 une zone dans laquelle le mélange air/carburant est suffisamment riche localement pour permettre un amorçage aisé de la combustion.

Selon un autre aspect de l'invention, la face supérieure 44 du piston 16 comporte une nervure 50 qui s'étend selon la direction du premier plan de référence P1 en dessous du pan 24 du toit dans lequel débouche le conduit d'admission 36.

Comme on peut le voir sur la figure 2, la nervure centrale 50 s'étend sensiblement sur un rayon de la face supérieure 44, le rayon diamétralement opposé à l'injecteur 40.

Ainsi, la nervure 50 délimite dans l'évidement 46 deux alvéoles 52 qui sont chacune agencées sensiblement en dessous de l'une des bougies 52, de part et d'autre du premier plan de référence P1. Grâce à cette configuration, les flux de gaz admis par chacun des deux conduits d'admission 30 peuvent être chacun dirigés principalement en direction de la bougie 34 qui est agencée du même côté du premier plan de référence P1.

Au contraire, l'injecteur 40 qui est orienté en direction de la face supérieure 44 du piston 16, délivre un jet de carburant qui peut par exemple être conique, de conicité suffisamment ouverte, pour que le carburant soit dirigé en direction de chacune des deux alvéoles 52 par les mouvements tourbillonnaires des gaz admis par chacun des deux conduits d'admission 30.

On peut également prévoir d'utiliser un injecteur 40 à deux jets, chacun des jets étant orienté sensiblement en direction de l'une des alvéoles 52.

Ainsi, grâce à l'implantation et à la géométrie des différents éléments dans le cylindre 10, il est créé en quelque sorte deux chambres de combustion qui sont relativement indépendantes l'une par rapport à l'autre mais dans chacune desquelles le carburant est dirigé de manière optimale en direction de la bougie correspondante.

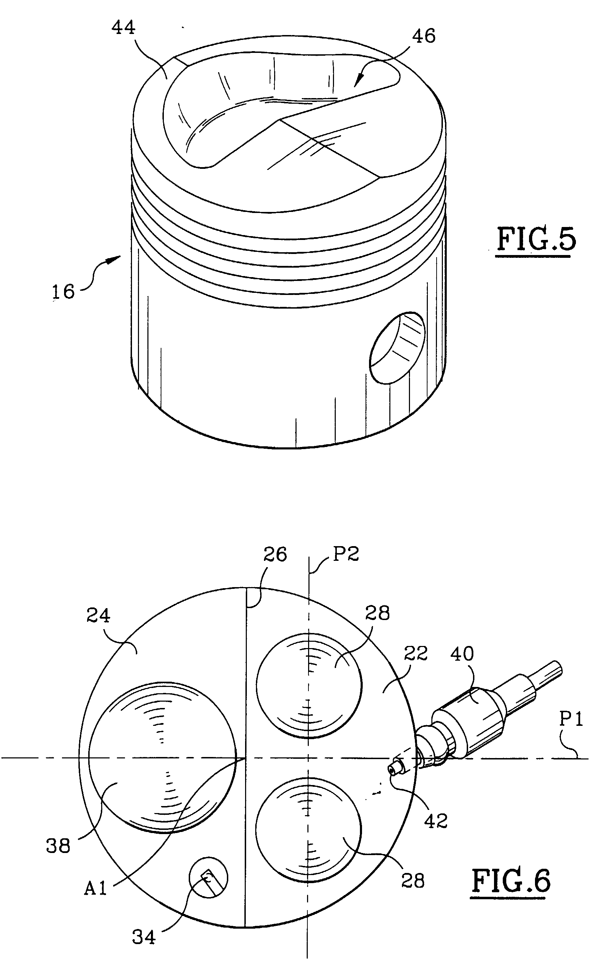

On a illustré sur les figures 5 et 6 un second mode de réalisation de l'invention qui diffère du premier uniquement du fait qu'il ne comporte qu'une bougie d'allumage 34 par cylindre, ce qui implique aussi une forme différente de l'évidement concave 46 du piston 16 et une orientation différente du jet de carburant fournit par l'injecteur 40.

En effet, l'unique bougie 34 de ce second mode de réalisation est agencée au même endroit que l'une des deux bougies du premier mode de réalisation. Le fait de décaler cette bougie d'un côté du premier plan de référence plutôt que de la placer sur l'axe du cylindre permet en effet de conserver des soupapes 28, 38 de grand diamètre tant à l'admission qu'à l'échappement.

Aussi, dans ce mode de réalisation de l'invention, l'évidement concave 46 de la face supérieure 44 du piston 16 ne s'étend que d'un seul côté du premier plan de référence P1, en dessous de la bougie 34. De l'autre côté du premier plan de référence P1, la face supérieure 44 présente de préférence une forme complémentaire de celle de la face inférieure 20 en toit de la culasse 18 de telle sorte que, lorsque le piston 16 est au point mort haut, le volume du cylindre au-dessus de cette partie de la face supérieure 44 est très faible.

Ainsi, lors du temps de compression, les gaz et/ou le carburant contenus dans le cylindre subissent un effet de chasse qui les propulse, notamment en fin de compression, selon une direction perpendiculaire au premier plan de référence P1, en direction de la bougie 34.

Cet effet de chasse, combiné au mouvement de "tumble" tel que vu précédemment, favorise la concentration du carburant à proximité de l'unique bougie 34.

Il est à noter que si un seul des deux conduits d'admission 30 est muni d'un dispositif pour créer un mouvement de "tumble", il est préférable qu'il s'agisse de celui qui est agencé du même côté du premier plan de référence P1 que la bougie 34.

Enfin, on prévoira avantageusement dans ce second mode de réalisation que le jet de carburant soit projeté en direction de l'évidement 46, par exemple en orientant l'injecteur 40 de la manière illustrée à la figure 6 ou en utilisant un nez d'injecteur 42 spécifique.

Dans les deux modes de réalisation de l'invention qui viennent d'être décrit, le mouvement organisé des gaz est un mouvement de tumble dans le sens horaire, éventuellement combiné à un mouvement de chasse. Cependant, on pourra dans certaines conditions préférer d'imprimer aux gaz contenus dans le cylindre un mouvement de tumble de sens inverse, c'est-à-dire de sens anti-horaire. Dans ce cas, et si le piston est muni d'un évidement concave, ce dernier sera avantageusement décentré par rapport à l'axe A1 du cylindre de manière à être agencé sensiblement en dessous du débouché du conduit d'échappement.

Éventuellement, le mouvement organisé des gaz pourra aussi comporter un mouvement de type "swirl" dans lequel les gaz sont animés d'un mouvement de rotation autour d'un axe parallèle à l'axe A1 du cylindre 10. Ce mouvement de "swirl" pourra être utilisé seul ou en combinaison avec un mouvement de "tumble" tel que décrit précédemment.

## Revendications

1. Moteur à combustion interne à allumage commandé et à injection directe, du type dans lequel un cylindre (10) comporte une chambre de combustion qui est délimitée axialement vers le haut par une face inférieure (20) d'une culasse (18) dans laquelle débouchent d'une part deux conduits d'admission (30), qui sont agencés de part et d'autre d'un premier plan de référence (P1) contenant l'axe (A1) du cylindre (10), et d'autre part un conduit d'échappement (36) dont l'axe de débouché est sensiblement contenu dans le premier plan de référence (P1), et du type comportant un injecteur d'essence (40) dont le nez (42) débouche dans la chambre de combustion,
caractérisé en ce que l'injecteur (40) est agencé radialement vers l'extérieur par rapport à un second plan de référence (P2) qui est parallèle à l'axe (A1) du cylindre (10) et qui passe par le centre du débouché des conduits d'admission (30), en ce que le cylindre (10) comporte au moins une bougie d'allumage (34) qui est agencée du côté opposé au nez (42) de l'injecteur (40) par rapport au second plan de référence (P2) et qui est décalée sur un côté par rapport au premier plan de référence (P1), et en ce qu'au moins un des conduits d'admission (30) comporte des moyens (48) pour créer dans la chambre de combustion, au moins pour certaines phases de fonctionnement du moteur, un mouvement organisé des gaz contenus dans la chambre.

2. Moteur selon la revendication 1, caractérisé en ce que le cylindre (10) est délimité vers le bas par la face supérieure (44) d'un piston (16), et en ce qu'un évidement concave (46) est aménagé dans la face supérieure (44) du piston (16).

3. Moteur selon la revendication 2, caractérisé en ce que l'évidement concave (46) est agencé en dessous de la bougie d'allumage (34).

4. Moteur selon la revendication 3, caractérisé en ce que la face supérieure (44) du piston (16) présente, du côté opposé à l'évidement (46) par rapport au premier plan de référence (P1), une forme complémentaire de la face inférieure (20) de la culasse (18) de manière à chasser, selon une direction perpendiculaire au premier plan de référence, le carburant et/ou les gaz en direction de la bougie d'allumage (34).

5. Moteur selon l'une des revendications 3 ou 4, caractérisé en ce que le nez d'injecteur (42) est dirigé sensiblement en direction de l'évidement (46) de la face supérieure (44) du piston (16).

6. Moteur selon l'une des revendications 1 ou 2, caractérisé en ce qu'il comporte deux bougies d'allumage (34) qui sont agencées symétriquement de part et d'autre du premier plan de référence (P1).

7. Moteur selon la revendication 6 prise en combinaison avec la revendication 2, caractérisé en ce que la face supérieure (44) du piston (16) comporte une nervure (50) qui est agencée selon le premier plan de référence (P1) et qui sépare l'évidement concave (46), au moins partiellement, en deux alvéoles (52).

8. Moteur selon la revendication 7, caractérisé en ce que les alvéoles (52) s'étendent chacune en dessous de l'une des bougies (34).

9. Moteur selon la revendication 8, caractérisé en ce que l'injecteur (40) est agencé sensiblement dans le premier plan de référence (P1), en ce que le nez d'injecteur (42) est dirigé sensiblement vers l'axe (A1) du cylindre (10) de telle sorte que le carburant est injecté par l'injecteur 40 en direction de la face supérieure (44) du piston (16), et en ce que le carburant est réparti dans les deux alvéoles (52).

10. Moteur selon la revendication 9, caractérisé en ce que l'injecteur (40) comporte au moins deux axes principaux d'injection de carburant qui sont dirigés chacun en direction d'une des alvéoles (52).

11. Moteur selon l'une quelconque des revendications précédentes, caractérisé en ce que les conduits d'admission (30) débouchent dans la chambre selon une direction sensiblement parallèle à l'axe (A1) du cylindre (10).

12. Moteur selon l'une quelconque des revendications précédentes, caractérisé en ce que la face inférieure (20) de la culasse (18) qui délimite le cylindre (10) est conformée en un toit à deux pans (22, 24), en ce que les conduits d'admission (30) et l'injecteur (40) débouchent dans un premier (22) des pans tandis que le conduit d'échappement (36) et la bougie (34) débouchent dans le second (24) des pans.

13. Moteur selon l'une quelconque des revendications précédentes, caractérisé en ce que le mouvement organisé des gaz dans le cylindre comporte un mouvement de rotation autour d'un axe perpendiculaire au premier plan de référence (P1) selon un sens horaire lorsque l'on regarde le cylindre (10) de telle sorte que les conduits d'admission (30) sont à droite et le conduit d'échappement (36) à gauche.

14. Moteur selon l'une quelconque des revendications 1 à 13, caractérisé en ce que le mouvement organisé des gaz dans le cylindre comporte un mouvement de rotation autour d'un axe perpendiculaire au premier plan de référence (P1) selon un sens anti-horaire lorsque l'on regarde le cylindre (10) de telle sorte que les conduits d'admission (30) sont à droite et le conduit d'échappement (36) à gauche.

15. Moteur selon la revendication 14 prise en combinaison avec l'une quelconque des revendications 2 à 12, caractérisé en ce que l'évidement concave (46) est décentré de manière à être agencé sensiblement en dessous du débouché du conduit d'échappement (36).

16. Moteur selon l'une quelconque des revendications précédentes, caractérisé en ce que le mouvement organisé des gaz dans le cylindre comporte un mouvement de rotation autour d'un axe sensiblement parallèle à l'axe (A1) du cylindre (10).
